# EUROPÄISCHE PATENTSCHRIFT

(11) **EP 1 428 180 B1**
(45) Veröffentlichungstag und Bekanntmachung des Hinweises auf die Patenterteilung: **16.11.2005**
(21) Anmeldenummer: 02797872.5
(22) Anmeldetag: 02.08.2002
(51) Int. Cl.: G06T 17/10, G05B 19/4093

(54) **VERFAHREN UND VORRICHTUNG ZUR BEARBEITUNG VON KONTURTASCHEN DEFINIERT DURCH CSG**
METHOD AND DEVICE FOR MACHINING CONTOURED RECESSES DEFINED BY CSG
PROCEDE ET DISPOSITIF POUR USINER DES POCHES A CONTOURS DEFINIES PAR CSG

(30) Priorität: 11.09.2001 DE 10144710
(43) Veröffentlichungstag der Anmeldung: 16.06.2004
(73) Patentinhaber: Dr. Johannes Heidenhain GmbH, 83292 Traunreut (DE)
(72) Erfinder: VOLLMAYR, Norbert, 83374 Traunwalchen (DE); WIMMER, Maximilian, 83278 Traunstein (DE)
(86) Internationale Anmeldenummer: PCT/EP2002/008601
(87) Internationale Veröffentlichungsnummer: WO 2003/023719

(56) Entgegenhaltungen:
- EP-A- 0 477 398
- EP-A- 0 503 251
- US-A- 4 618 924
- US-A- 5 388 199
- US-A- 5 847 956

## Beschreibung

Die Erfindung betrifft ein Verfahren zur Bearbeitung von Konturtaschen nach dem Oberbegriff des Anspruches 1. Die Erfindung betrifft weiter eine Vorrichtung zur Bearbeitung von Konturtaschen nach dem Oberbegriff des Anspruches 16.

Eine in der Bearbeitung von Werkstücken mittels einer Werkzeugmaschine häufig vorkommende Aufgabe ist die Konturtaschenbearbeitung. Solche Konturtaschen werden durch eine von einer Numerischen Steuerung kontrollierten Werkzeugmaschine etwa mittels einer Fräsbearbeitung eines Werkstückes hergestellt. Dabei werden Bereiche der Oberfläche des Werkstückes bearbeitet, deren Definition am Anfang jeder Konturtaschenbearbeitung steht. Weitere typische Bearbeitungsschritte zum Herstellen einer Konturtasche sind dann etwa Vorbohren, Ausräumen und Schlichten.

Die Definition der Konturtasche ist eine nicht einfache Aufgabe, sobald die Form der Konturtasche komplizierter ist als die einfachster geometrischer Figuren wie Kreis, Rechteck oder Dreieck. Es können innerhalb der Konturtaschen auch Inseln stehen bleiben, und die Umrandungen der Konturtaschen können beliebig kompliziert sein.

Bisherige Numerische Steuerungen bieten bereits Funktionen zur Definition von Konturtaschen an, die jedoch den Anwender noch nicht optimal bei der Lösung seiner Aufgabe unterstützen. Im Handbuch zur Software der Numerischen Steuerung TNC 426 der Anmelderin ist ein Verfahren beschrieben, mit dem die Definition einer Konturtasche vorgenommen werden kann. Dazu werden Umrandungen von Flächen definiert, die dann in einem eigenen Zyklus abgearbeitet werden. Vom Richtungssinn und von der Fräserradiuskorrektur einer Umrandung hängt es ab, ob die Umrandung eine Tasche oder eine Insel beschreibt. Die letztlich entstehende Konturtasche ist dann die Summe aller Taschen abzüglich der Summe aller Inseln. Um mit diesem System kompliziertere, insbesondere aus mehreren Grundformen zusammengesetzte Konturtaschen zu definieren, ist ein gewisses Maß an Erfahrung notwenig. Zudem kann erst nach Abschluß der Programmierung in einem Simulationslauf die zu erwartende Konturtasche begutachtet werden.

Aus der EP0477398B1 ist es bekannt, kompliziertere Werkstückgeometrien zum Zwecke der Fräserradiuskorrektur aus einfacheren Grundkörpem mittels Mengenoperationen (Vereinigung, Schnitt, etc.) zu erstellen, da dann die Fräserradiuskorrektur bereits an den einfacheren Grundkörpem vorgenommen werden kann.

Die US5847956 offenbart bereits ein CAD/CAM - System, das die Zusammensetzung komplexer Körper aus einfachen Grundkörpem ermöglicht, welche mit Mengenoperationen verknüpft werden.

Eine Aufgabe der Erfindung ist es, ein Verfahren zur Bearbeitung von Konturtaschen anzugeben, das es auch ungeübten Anwendern erlaubt, Konturtaschen schnell und fehlerfrei zu erstellen.

Diese Aufgabe wird gelöst durch ein Verfahren nach Anspruch 1. Vorteilhafte Details des Verfahrens ergeben sich aus den von Anspruch 1 abhängigen Ansprüchen.

Eine weitere Aufgabe der Erfindung ist es, eine Vorrichtung anzugeben, die ein schnelles und fehlerfreies Bearbeiten von Konturtaschen erlaubt.

Diese Aufgabe wird gelöst durch eine Vorrichtung mit den Merkmalen des Anspruches 16. Vorteilhafte Details ergeben sich aus den von Anspruch 16 abhängigen Ansprüchen.

Es wird nun vorgeschlagen, zur Bearbeitung einer Konturtasche mittels einer entsprechend eingerichteten Numerischen Steuerung in einem ersten Schritt wenigstens eine erste und eine zweite elementare Fläche vorzugeben, die dann in einem zweiten Schritt in einem Konturausdruck mittels eines Operators zu einer zusammengesetzten Fläche verknüpft werden. Nach der Auswertung der Verknüpfung und der Berechnung der aus dem Konturausdruck resultierenden Fläche wird die resultierende Fläche in einer graphischen Benutzeroberfläche dargestellt.

Der Anwender dieses Verfahrens zur Bearbeitung einer Konturtasche bzw. einer entsprechend eingerichteten Vorrichtung kann dabei von zusätzlichen Hilfestellungen profitieren. Bei der Definition der Fläche einer Konturtasche wird nun von elementaren Flächen ausgegangen, deren Verknüpfung schon während der Programmierung der Numerischen Steuerung auf der Benutzeroberfläche zu verfolgen ist. Fehler können so sofort erkannt und korrigiert werden. Die Auswahl der richtigen Verknüpfung wird durch entsprechende Softkeys und durch die Anzeige von Hilfstexten unterstützt.

Weitere Vorteile sowie Einzelheiten der vorliegenden Erfindung ergeben sich aus der nachfolgenden Beschreibung anhand der Figuren. Dabei zeigt
- Figur 1: ein Werkstück mit einer Konturtasche,
- Figur 2: die Fläche einer Konturtasche,
- Figur 3: eine Werkzeugmaschine mit Numerischer Steuerung,
- Figur 4: verschiedene Verknüpfungen zweier elementarer Flächen,
- Figur 5: ein Verfahren zur Bearbeitung einer Konturtasche,
- Figur 6: eine Benutzeroberfläche mit einer weiteren Verknüpfung elementarer Flächen.

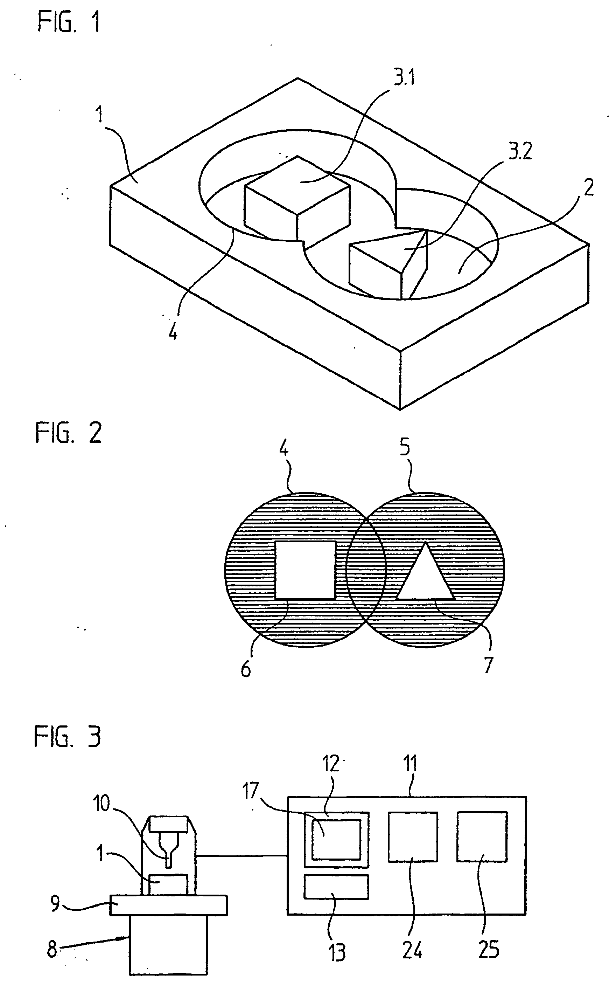

Figur 1 zeigt ein Werkstück 1 mit einer Konturtasche 2, die zwei Inseln 3.1 und 3.2 enthält. Wie auch in Figur 2 zu erkennen ist, entsteht die Fläche der Konturtasche 2 durch die Vereinigung zweier elementarer Flächen 4 (in diesem Beispiel zwei Kreisflächen 4 und 5) und dann dem Schnitt dieser Vereinigung mit dem Komplement eines Quadrats 6 und dem Komplement eines Dreiecks 7. Der Schnitt einer Fläche mit dem Komplement einer anderen Fläche kann auch als Bildung der Differenz der beiden Flächen gesehen werden. Im Beispiel werden Quadrat 6 und Dreieck 7 von der Vereinigung der beiden Kreisflächen 4 und 5 abgezogen. Beispielsweise durch eine Fräsbearbeitung entsteht dann die eigentliche Konturtasche 2 des Werkstückes 1.

Eine solche Fräsbearbeitung wird von einer Werkzeugmaschine 8 durchgeführt, wie sie in Figur 3 dargestellt ist. Auf einem Bearbeitungstisch 9 ist das Werkstück 1 aufgespannt. Das Werkzeug 10 wird durch die relative Bewegung zwischen Werkstück 1 und Werkzeug 10 materialabtragend durch das Werkstück 1 geführt. Die beweglichen Achsen der Werkzeugmaschine 8 werden dabei von einer Numerischen Steuerung 11 kontrolliert. Diese Numerische Steuerung 11 kann außerdem zur Erstellung der Bearbeitungsprogramme für die Werkzeugmaschine 8 dienen. Ein Aspekt ist dabei die Programmierung der Konturtascttenbearbeitung. Als wichtigster Schritt hierzu kann die Definition der Fläche der Konturtasche 2 gelten, weitere Schritte bestehen dann beispielsweise in der Wahl eines geeigneten Werkzeuges 10, der besten Ausräumstrategie, der Bearbeitungstiefe und der gewünschten Oberflächenqualität. Im folgenden soll mit der Definition der Konturtasche 2 aber lediglich die Definition der Fläche einer Konturtasche 2 gemeint sein.

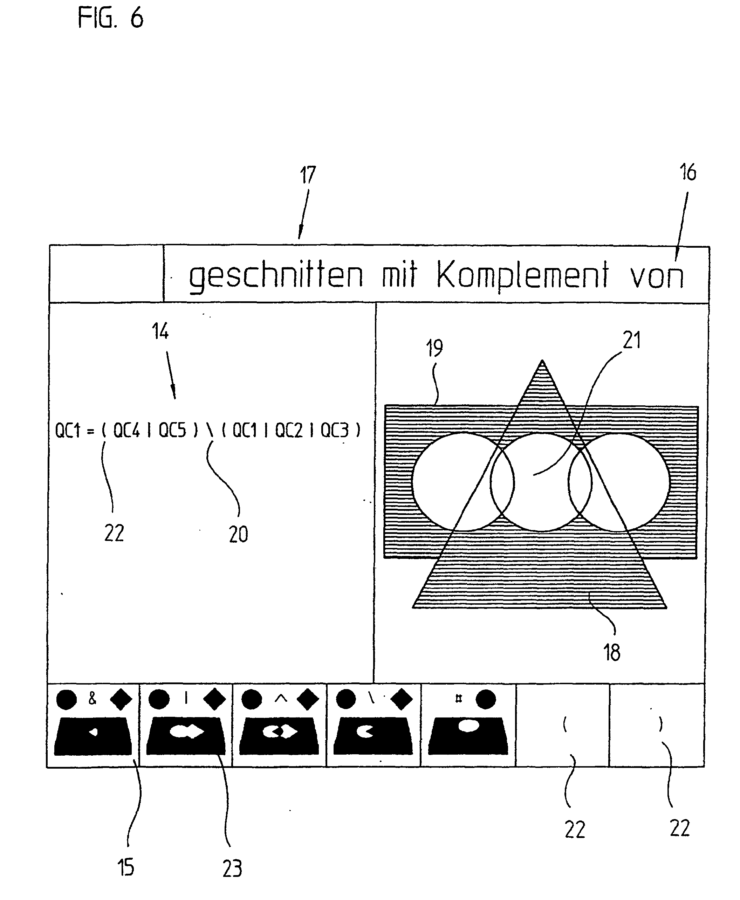

Die Numerische Steuerung 11 verfügt über einen Bildschirm 12 mit einer graphischen Benutzeroberfläche 17, wie sie später noch anhand von Figur 6 erläutert wird. Um Benutzereingaben zu ermöglichen, verfügt die Numerische Steuerung außerdem über eine Tastatur 13 und / oder andere Eingabemöglichkeiten. Ein Speicher 24 dient zum Speichern aller für die Durchführung der Werkstückbearbeitung benötigten Daten, in einer Recheneinheit 25 werden diese Daten verarbeitet und alle notwendigen Aktionen ausgelöst.

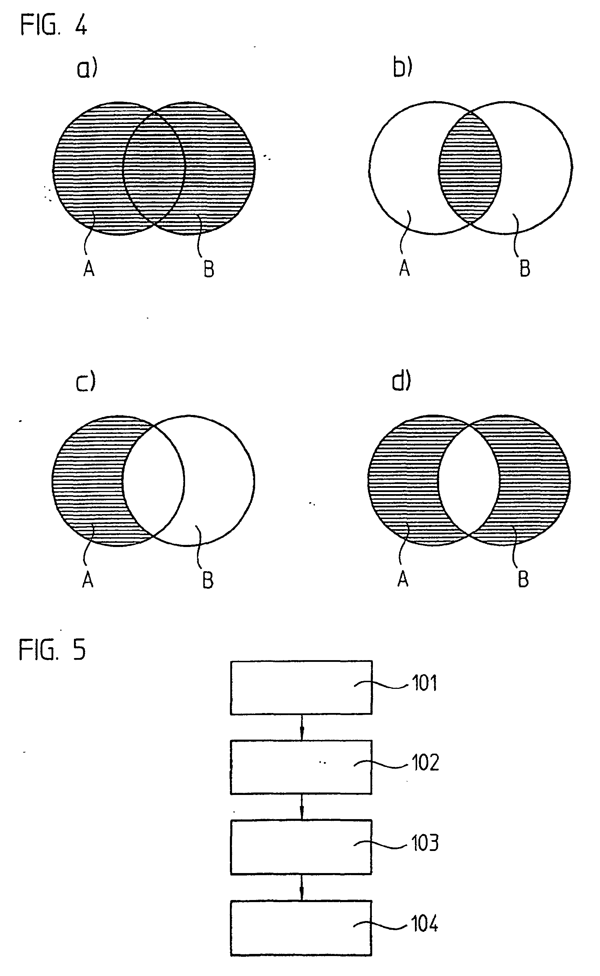

Zum besseren Verständnis sollen anhand der Figur 4 die Operatoren erläutert werden, die zur Verknüpfung von elementaren Flächen 4 dienen. Das Ergebnis einer solchen Verknüpfung, eine zusammengesetzte Fläche, kann natürlich wiederum mittels eines Operators mit einer elementaren Fläche 4 oder einer zusammengesetzten Fläche verknüpft werden.

Figur 4a zeigt die Vereinigung einer ersten Fläche A mit einer zweiten Fläche B. Dies entspricht einer logischen "A ODER B" - Verknüpfung der beteiligten Flächen.

Figur 4b zeigt den Schnitt einer ersten Fläche A mit einer zweiten Fläche B. Dies entspricht einer logischen "A UND B" - Verknüpfung der beteiligten Flächen.

Figur 4c zeigt den Schnitt einer ersten Fläche A mit dem Komplement einer zweiten Fläche B. Dies entspricht einer logischen "A UND NICHT B" - Verknüpfung der beteiligten Flächen.

Figur 4d zeigt die Vereinigung einer ersten Fläche A mit einer zweiten Fläche B ohne den Schnitt von A und B. Dies entspricht einer logischen "(A ODER B) UND NICHT (A UND B)" - Verknüpfung der beteiligten Flächen, beziehungsweise einer "A EXKLUSIV ODER B" - Verknüpfung der beteiligten Flächen.

Neben den hier erklärten Operatoren gibt es weitere wichtige Elemente, die eine logische Verknüpfung von elementaren Flächen 4 in einem Konturausdruck erlauben. So benötigt man Klammern, um Teile des Konturausdrucks bevorzugt berechnen zu können, sowie einen Operator zur Bildung des Komplements einer elementaren Fläche 4.

Es soll nun anhand der Figur 5 ein Verfahren zur Definition einer Konturtasche 2 beschrieben werden. Es wird dabei auch Bezug auf die dazu benötigten Elemente einer Numerischen Steuerung 11 und ihrer graphischen Benutzeroberfläche 17 genommen, die in der Figur 3 bzw. Figur 6 dargestellt sind.

Wie im Stand der Technik üblich, beginnt das Verfahren zur Definition einer Konturtasche 2 mit einem Schritt 101 zur Definition von wenigstens zwei elementaren Flächen 4. Dazu kann beispielsweise in einem Unterprogramm die Umrandung 19 festgelegt werden, die die elementare Fläche 4 einschließt. So kann eine Kreisfläche durch die Mittelpunktskoordinaten und den Radius bestimmt werden, oder eine Dreiecksfläche durch die Angabe der Eckkoordinaten. Das Unterprogramm kann hierzu über die Tastatur 13 in die Numerische Steuerung 11 eingegeben und im Speicher 24 abgelegt werden. Natürlich können die elementaren Flächen 4 auch deutlich komplexere Umrandungen 19 haben als die in den Beispielen verwendeten einfachen geometrischen Elemente. Es ist sogar denkbar, elementare Flächen 4 mit einer nicht geschlossenen Umrandung 19 zu verwenden, etwa eine durch eine Gerade abgetrennte Halbebene. Einmal definierte elementare Flächen können jederzeit erneut zur Definition einer weiteren Konturtasche aufgerufen werden, etwa durch einen Aufruf des im Speicher 24 abgelegten Unterprogramms.

In einem nächsten Schritt 102 werden die elementaren Flächen 4 mit Operatoren 20 verknüpft. In einem Konturausdruck 14 werden dabei wenigstens zwei elementare Flächen 4 mittels Operatoren 20 verknüpft. Es stehen dabei z.B. Operatoren 20 mit der logischen Funktion "ODER", "UND", "UND NICHT" und "EXKLUSIV ODER" zur Verfügung. Die Numerische Steuerung 11 akzeptiert auch Klammern 22, um Teile des Konturausdrucks 14 bevorzugt auszuwerten. Ein Operator 20 "NOT' zur Bildung des Komplements einer elementaren Fläche 4 oder einer zusammengesetzten Fläche 21 (also beispielsweise einen in Klammern 22 gesetzten Teil des Konturausdrucks 14) zu bilden. Auf dem Bildschirm 12 der Numerischen Steuerung 11 werden in der graphischen Benutzeroberfläche 17 Softkeys 15 angeboten, die eine Auswahl des jeweiligen Operators 20 oder einer Klammer 22 erlauben. Diese Softkeys 15 enthalten Bildsymbole 23, die schematisch (nach Art der Figuren 4a - d) den jeweiligen Operator 20 erläutern. Zusätzlich werden in der graphischen Benutzeroberfläche 17 Hilfstexte 16 angezeigt, sobald ein Operator 20 ausgewählf wurde. Der Konturausdruck 14 wird über die Tastatur 13 im Speicher 24 der Numerischen Steuerung 11 abgelegt.

Vorteilhafterweise wird der nächste Schritt 103 nach jeder Änderung des Konturausdrucks 14 durchgeführt. In der Recheneinheit 25 der Numerischen Steuerung 11 wird der Konturausdruck 14 ausgewertet und eine resultierende Fläche 18 berechnet. Diese resultierende Fläche 18 entspricht der Fläche der Konturtasche 2. Der Konturausdruck 14 kann dabei durchaus so komplex sein, daß mehrere untereinander nicht zusammenhängende Konturtaschen 2 entstehen. Vorteilhafterweise läßt sich auch eine solche resultierende Fläche 18 wieder als elementare Fläche 4 definieren, die dann in anderen Konturausdrücken 14 weiterverwendet werden kann. So wird noch einmal klar, daß eine elementare Fläche 4 nicht notwendigerweise einfach sein muß.

In einem weiteren Schritt 104 wird nun die resultierende Fläche 18 in der graphischen Benutzeroberfläche 17 auf dem Bildschirm 12 der Numerischen Steuerung 11 angezeigt. Dabei wird die resultierende Fläche 18 als ausgefüllte Umrandung 19 dargestellt, um ein schnelles Erfassen der resultierenden Fläche 18 zu ermöglichen. Die elementaren Flächen 4 werden dagegen lediglich mittels ihrer Umrandung 19 dargestellt. Vorteilhafterweise ist in der graphischen Benutzeroberfläche 17 sowohl der Konturausdruck 14 als auch die resultierende Fläche 18 gleichzeitig dargestellt, wie es auch in Figur 6 zu erkennen ist.

Anhand von Figur 6 sei noch eine weitere Verknüpfung elementarer Flächen 4 erläutert. Im Konturausdruck 14 bezeichnen die Operanden QC4 und QC5 elementare Flächen 4, hier ein Rechteck bzw. Dreieck, die mittels des Operators 20 "ODER" zu einer ersten zusammengesetzten Fläche 21 verknüpft sind, ebenso QC1, QC2 und QC3, hier Kreise, die durch den Operator 20 "ODER" verknüpft sind. Wegen der Klammern 22 werden die beiden zusammengesetzten Flächen 21 bevorzugt in der Recheneinheit 24 ausgewertet. Verbunden sind die beiden zusammengesetzten Flächen 21 mit dem Operator "UND NICHT', so daß die drei vereinigten Kreisflächen QC1, QC2 und QC3 von der Vereinigung aus Rechteck QC4 und Dreieck QC5 abgezogen werden. Die resultierende Fläche 18 ist in Figur 6 ebenso zu erkennen wie der Hilfstext zum zuletzt verwendeten "UND NICHT' - Operator 20, sowie die Softkeys 15 mit ihren Bildsymbolen 23.

Wenn die Schritte 103 und 104 jedesmal ausgeführt werden, sobald in Schritt 102 eine Änderung des Konturausdrucks 14 vorgenommen wurde, wird einem Benutzer der Numerischen Steuerung 11 eine größtmögliche Hilfestellung beim Definieren einer Konturtasche 2 angeboten.

Die weitere Bearbeitung der Konturtasche 2 erfolgt in üblicher Weise, indem die Numerische Steuerung 11 die Werkzeugmaschine 8 so steuert, daß eine Konturtasche 2 mit der Form der resultierenden Fläche 18 im Werkstück 1 erzeugt wird. Die dazu notwendigen Bearbeitungsschritte sind dann etwa Vorbohren, Ausräumen und Schlichten mit den geeigneten Werkzeugen 10.

## Patentansprüche

1. Verfahren zur Bearbeitung von Konturtaschen (2) eines Werkstückes (1), bei dem einer Numerischen Steuerung (11) in einem Schritt (101) wenigstens eine erste und zweite elementare Fläche (4, 5) vorgegeben werden, mit folgenden weiteren Schritten:
102) Verknüpfen der ersten elementaren Fläche (4) mit der zweiten elementaren Fläche (5) zu einer zusammengesetzten Fläche (21) mittels Operatoren (20) in einem Konturausdruck (14), wobei der Konturausdruck (14) über eine graphische Benutzeroberfläche (17) der Numerischen Steuerung (11) eingegeben wird, und wobei auf der graphischen Benutzeroberfläche (17) den Operatoren (20) entsprechende Softkeys (15) mit die Operatoren (20) erklärenden Bildsymbolen (23) dargestellt werden.
103) Auswertung des Konturausdrucks (14) und Berechnung der aus dem Konturausdruck (14) resultierenden Fläche (18).
104) Darstellung der resultierenden Fläche (18) in einer graphischen Benutzeroberfläche (17).

2. Verfahren nach Anspruch 1, bei dem in Schritt 102) im Konturausdruck (14) weitere Verknüpfungen zwischen elementaren Flächen (4, 5) und zusammengesetzten Flächen (21) gebildet werden.

3. Verfahren nach Anspruch 1 oder 2, bei dem in Schritt 102) wenigstens einer der Operatoren (20)
- Vereinigung einer ersten Fläche (A) mit einer zweiten Fläche (B),
- Schnitt der ersten Fläche (A) mit der zweiten Fläche (B),
- Schnitt der ersten Fläche (A) mit dem Komplement der zweiten Fläche (B),
- Vereinigung der ersten Fläche (A) mit der zweiten Fläche (B) abzüglich des Schnitts der ersten Fläche (A) mit der zweiten Fläche (B)
zur Verknüpfung von elementaren Flächen (4, 5) und zusammengesetzten Flächen (21) zum Einsatz kommt.

4. Verfahren nach einem der vorhergehenden Ansprüche, bei dem der Konturausdruck (14) wenigstens ein Paar von Klammern (22) enthält, wodurch eine bevorzugte Berechnung des Inhalts der Klammern (22) bei der Auswertung des Konturausdrucks (14) in Schritt 103) vorgenommen wird.

5. Verfahren nach einem der vorhergehenden Ansprüche, bei dem der Konturausdruck (14) einen Operator (20) zur Bildung des Komplements einer elementaren Fläche (4, 5) oder zusammengesetzten Fläche (21) enthält.

6. Verfahren nach einem der vorhergehenden Ansprüche, bei dem die graphische Benutzeroberfläche (17) nach Auswahl eines Operators (20) einen Hilfstext (16) anzeigt, der diesen Operator (20) erläutert.

7. Verfahren nach einem der vorhergehenden Ansprüche, bei dem die resultierende Fläche (18) mittels einer ausgefüllten Umrandung (19) dargestellt wird.

8. Verfahren nach einem der vorhergehenden Ansprüche, bei dem die im Konturausdruck (14) verwendeten elementaren Flächen (4) lediglich mittels ihrer Umrandung (19) dargestellt werden.

9. Verfahren nach einem der vorhergehenden Ansprüche, bei dem die Schritte 103) und 104) nach jeder Änderung des Konturausdruckes (14) erneut durchgeführt werden.

10. Verfahren nach Anspruch 9, bei dem die Darstellung der resultierenden Fläche (18) gleichzeitig mit der Anzeige des Konturausdrucks (14) erfolgt, und so Änderungen am Konturausdruck (14) unmittelbar zu Änderungen in der Darstellung der resultierenden Fläche (18) führen.

11. Verfahren nach einem der vorhergehenden Ansprüche, bei dem die Numerische Steuerung (11) die Werkzeugmaschine (8) so steuert, daß eine Konturtasche (2) mit der Form der resultierenden Fläche (18) erzeugt wird.

12. Vorrichtung zur Bearbeitung von Konturtaschen (2), mit einer Numerischen Steuerung (11) geeignet zur Definition der Konturtaschen (2), mit einem Bildschirm (12), der eine graphische Benutzeroberfläche (17) darstellt, mit einem Speicher (24), der über eine Tastatur (13) eingebbare Daten von wenigstens einer ersten und einer zweiten elementaren Fläche (4) enthält, **dadurch gekennzeichnet, daß** der Speicher 24 außerdem einen über die Tastatur (13) eingebbaren Konturausdruck (14) enthält, der mittels wenigstens eines Operators (20) die elementaren Flächen (4) miteinander verknüpft, und daß eine Recheneinheit (25) zur Berechnung einer resultierenden Fläche (18) aus dem Konturausdruck (14) in der Numerischen Steuerung vorhanden ist, und daß weiter die resultierende Fläche (18) auf dem Bildschirm (12) darstellbar ist, und daß die Operatoren (20) des Konturausdrucks (14) über Softkeys (15) mit die Operatoren (20) erklärenden Bildsymbolen (23) der graphischen Benutzeroberfläche (17) auswählbar sind.

13. Vorrichtung nach Anspruch 12, **dadurch gekennzeichnet, daß** nach Auswahl eines Operators (20) ein Hilfstext zur Erläuterung des Operators darstellbar ist.

14. Vorrichtung nach Anspruch 12 oder 13, bei der in der graphischen Benutzeroberfläche (17) gleichzeitig der Konturausdruck (14) und die aus dem Konturausdruck (14) resultierende Fläche (18) dargestellt sind.

## Claims

1. Method for machining contoured recesses (2) of a workpiece (1), in which at least a first and a second elementary surface (4, 5) are specified to a numerical control unit (11) in one step (101), having the following further steps:
102) combining the first elementary surface (4) with the second elementary surface (5) to form a combined surface (21), by means of operators (20) in a contour expression (14), the contour expression (14) being input to the numerical control (11) via a graphic user surface (17), and softkeys (15) corresponding to the operators (20) with picture symbols (23) explaining the operators (20) being displayed on the graphic user surface (17),
103) evaluating the contour expression (14) and calculating the surface (18) resulting from the contour expression (14),
104) displaying the resulting surface (18) in a graphic user surface (17).

2. Method according to claim 1, in which, in step 102), further combinations between elementary surfaces (4, 5) and combined surfaces (21) are formed in the contour expression (14).

3. Method according to claim 1 or 2, in which, in step 102), at least one of the operators (20)
- union of a first surface (A) with a second surface (B),
- intersection of the first surface (A) with the second surface (B),
- intersection of the first surface (A) with the complement of the second surface (B),
- union of the first surface (A) with the second surface (B) minus the intersection of the first surface (A) with the second surface (B)
is used to combine elementary surfaces (4, 5) and combined surfaces (21).

4. Method according to one of the preceding claims, in which the contour expression (14) contains at least one pair of parentheses (22), as a result of which a preferred calculation of the content of the parentheses (22) is undertaken during evaluation of the contour expression (14) in step 103).

5. Method according to one of the preceding claims, in which the contour expression (14) contains an operator (20) in order to form the complement of an elementary surface (4, 5) or combined surface (21).

6. Method according to one of the preceding claims, in which, after selection of an operator (20), the graphic user surface (17) displays a help text (16) which explains this operator (20).

7. Method according to one of the preceding claims, in which the resulting surface (18) is represented by means of a filled-in border (19).

8. Method according to one of the preceding claims, in which the elementary surfaces (4) used in the contour expression (14) are only represented by means of their border (19).

9. Method according to one of the preceding claims, in which the steps 103) and 104) are implemented again after every change to the contour expression (14).

10. Method according to claim 9, in which the representation of the resulting surface (18) is effected simultaneously with the display of the contour expression (14), and thus changes to the contour expression (14) lead directly to changes in the representation of the resulting surface (18).

11. Method according to one of the preceding claims, in which the numerical control unit (11) controls the machine tool (8) such that a contour recess (2) with the form of the resulting surface (18) is produced.

12. Device for machining contour recesses (2), having a numerical control unit (11) which is suitable for defining the contour recesses (2), having a screen (12) which displays a graphic user surface (17), having a memory (24) which contains data of at least a first and a second elementary surface (4) which can be input via a keyboard (13), **characterised in that** the memory (24) contains in addition a contour expression (14) which can be input via the keyboard (13) and combines the elementary surfaces (4) together by means of at least one operator (20), and **in that** a processing unit (25) for calculating a resulting surface (18) from the contour expression (14) is present in the numerical control unit, and **in that** the resulting surface (18) can be displayed furthermore on the screen (12), and **in that** the operators (20) of the contour expression (14) can be selected via softkeys (15) with picture symbols (23) of the graphic user surface (17) which explain the operators (20).

13. Device according to claim 12, **characterised in that**, after selection of an operator (20), a help text can be displayed in order to explain the operator.

14. Device according to claim 12 or 13, in which, in the graphic user surface (17), the contour expression (14) and the surface (18) resulting from the contour expression (14) are displayed simultaneously.

## Revendications

1. Procédé d'usinage de poches à contour (2) d'une pièce à usiner (1), selon lequel on prédéfinit, lors d'une étape (101), pour une commande numérique (11) au moins une première et une deuxième surface élémentaire (4, 5), comprenant les étapes supplémentaires suivantes :
102) combinaison de la première surface élémentaire (4) avec la deuxième surface élémentaire (5) pour obtenir une surface composée (21), à l'aide d'opérateurs (20), dans une expression de contour (14), l'expression de contour (14) étant saisie via une interface utilisateur (17) graphique de la commande numérique (11), et des touches programmables (15), qui correspondent aux opérateurs (20) et comportent des symboles d'image (23) illustrant les opérateurs (20), étant représentées sur l'interface utilisateur (17) graphique.
103) exploitation de l'expression de contour (14) et calcul de la surface (18) résultant de l'expression de contour (14).
104) représentation de la surface résultante (18) dans une interface utilisateur (17) graphique.

2. Procédé selon la revendication 1, selon lequel on forme à l'étape 102) dans l'expression de contour (14) des combinaisons supplémentaires de surfaces élémentaires (4, 5) et de surfaces composées (21).

3. Procédé selon la revendication 1 ou 2, selon lequel on utilise à l'étape 102) au moins l'un des opérateurs (20) représentant
- la réunion d'une première surface (A) avec une deuxième surface (B),
- l'intersection de la première surface (A) avec la deuxième surface (B),
- l'intersection de la première surface (A) avec le complément de la deuxième surface (B),
- la réunion de la première surface (A) avec la deuxième surface (B), diminuée de l'intersection de la première surface (A) avec la deuxième surface (B),
pour combiner des surfaces élémentaires (4, 5) et des surfaces composées (21).

4. Procédé selon une des revendications précédentes, selon lequel l'expression de contour (14) comporte au moins une paire de parenthèses (22), grâce à quoi un calcul préférentiel du contenu des parenthèses (22) est effectué lors de l'exploitation de l'expression de contour (14) à l'étape 103).

5. Procédé selon une des revendications précédentes, selon lequel l'expression de contour (14) comporte un opérateur (20) pour former le complément d'une surface élémentaire (4, 5) ou d'une surface composée (21).

6. Procédé selon une des revendications précédentes, selon lequel, après sélection d'un opérateur (20), l'interface utilisateur (17) affiche un texte auxiliaire (16) expliquant ledit opérateur (20).

7. Procédé selon une des revendications précédentes, selon lequel la surface résultante (18) est représentée à l'aide d'une bordure (19) remplie.

8. Procédé selon une des revendications précédentes, selon lequel les surfaces élémentaires (4) utilisées dans l'expression de contour (14) sont représentées uniquement à l'aide de leur bordure (19).

9. Procédé selon une des revendications précédentes, selon lequel les étapes 103) et 104) sont exécutées de nouveau après chaque modification de l'expression de contour (14).

10. Procédé selon la revendication 9, selon lequel la représentation de la surface résultante (18) se fait simultanément avec l'affichage de l'expression de contour (14) et les modifications de l'expression de contour (14) déclenchent ainsi directement des modifications de la représentation de la surface résultante (18).

11. Procédé selon une des revendications précédentes, selon lequel la commande numérique (11) pilote la machine-outil (8) de manière telle qu'une poche à contour (2) avec la forme de la surface résultante (18) soit produite.

12. Dispositif d'usinage de poches à contour (2), comprenant une commande numérique (11) adaptée pour définir les poches à contour (2) et comportant un écran (12) représentant une interface utilisateur (17) graphique, une mémoire (24) contenant des données d'au moins une première et d'une deuxième surface élémentaire (4), qui peuvent être saisies via un clavier (13), **caractérisé par le fait que** la mémoire (24) contient en outre une expression de contour (14) qui peut être saisie via le clavier (13) et combine les surfaces élémentaires (4) entre elles, à l'aide d'au moins un opérateur (20), et **par le fait qu'**il est prévu une unité de calcul (25) destinée à calculer une surface résultante (18) à partir de l'expression de contour (14) dans la commande numérique, et **par le fait qu'**en outre la surface résultante (18) peut être représentée sur l'écran (12), et **par le fait que** les opérateurs (20) de l'expression de contour (14) peuvent être sélectionnés par l'intermédiaire de touches programmables (15) de l'interface utilisateur (17) graphique, qui portent des symboles d'image (23) illustrant les opérateurs (20).

13. Dispositif selon la revendication 12, **caractérisé par le fait qu'**après sélection d'un opérateur (20), un texte auxiliaire peut être affiché pour expliquer l'opérateur.

14. Dispositif selon la revendication 12 ou 13, dans lequel l'expression de contour (14) et la surface (18) résultant de cette expression de contour (14) sont représentées simultanément dans l'interface utilisateur (17) graphique.
